(19) Europäisches Patentamt
European Patent Office
Office européen des brevets

(11) **EP 4 099 447 A1**

(12) **EUROPEAN PATENT APPLICATION**
published in accordance with Art. 153(4) EPC

(43) Date of publication:
**07.12.2022 Bulletin 2022/49**

(21) Application number: **20917184.2**

(22) Date of filing: **07.12.2020**

(51) International Patent Classification (IPC):
**H01M 4/58** (2010.01)    **C01B 25/45** (2006.01)
**H01M 4/36** (2006.01)

(52) Cooperative Patent Classification (CPC):
**C01B 25/45; H01M 4/36; H01M 4/58; Y02E 60/10**

(86) International application number:
**PCT/JP2020/045410**

(87) International publication number:
**WO 2021/153007 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.01.2020 JP 2020010610**

(71) Applicant: **Toray Industries, Inc.**
**Tokyo, 103-8666 (JP)**

(72) Inventors:
• **ONOZUKA, Tomoya**
  **Otsu-shi, Shiga 520-8558 (JP)**
• **KAWAMURA, Hiroaki**
  **Otsu-shi, Shiga 520-8558 (JP)**

(74) Representative: **Mewburn Ellis LLP**
**Aurora Building**
**Counterslip**
**Bristol BS1 6BX (GB)**

(54) **ACTIVE MATERIAL FOR SECONDARY BATTERY ELECTRODES AND SECONDARY BATTERY USING SAME**

(57)    The purpose of the present invention is to provide an active material for a secondary battery electrode, the active material having excellent rate characteristics and cycle resistance. The present invention is an active material for a secondary battery electrode, the active material having an olivine-type crystal structure, while having a carbon layer on the surface, wherein the ratio of the average thickness of the carbon layer which is present on a plane that is perpendicular to the crystal b-axis to the average thickness of the carbon layer which is present on a plane that is not perpendicular to the b-axis is from 0.30 to 0.80.

EP 4 099 447 A1

(a)    (b)

0.630 nm (010)    0.534 nm (100)

10nm    × 2,000,000

Figure 1

**Description**

TECHNICAL FIELD

The present invention relates to an active material for a secondary battery electrode and a secondary battery using the same.

BACKGROUND ART

In recent years, as a result of increased concern about environmental issues, particularly, global warming, the reduction of the amount of fossil fuel used has become an important problem. In particular, in the fields of power supply and transportation in which the amount of fossil fuel used is high, renewable energy of a supply source and electrification of power have been studied. In these fields, demands for power storage devices such as secondary batteries is increasing in order to equalize power in renewable energy and to store power sources in electrification of power.

Lithium ion secondary batteries that are one kind of secondary batteries have a high energy density and are excellent in output characteristics. Meanwhile, there is a possibility that a malfunction of a lithium ion secondary battery may cause the stored energy to be released in a short time, resulting in firing and burning of the battery. Therefore, for lithium ion secondary batteries, improvement of both the output characteristics and the safety is an important problem.

It is well known that the safety of a lithium ion secondary battery largely depends on its positive electrode active material. A layered rock salt-based transition metal lithium oxide positive electrode active material which is often used in a large-sized battery for an electric vehicle or the like is a positive electrode active material exhibiting a particularly high energy density, but there is a problem in safety, for example, deterioration is promoted due to a change in a crystal structure accompanied by release of oxygen by charging and discharging, and there is a risk of smoke and fire depending on a use situation.

On the other hand, a positive electrode active material having an olivine-type crystal structure represented by lithium iron phosphate is a highly safe positive electrode material that does not easily release oxygen since oxygen is covalently bonded to phosphorus and is relatively stable even under high temperature conditions, but it has been known that the electron conductivity and ion conductivity thereof are lower than those of the layered rock salt-based transition metal lithium oxide positive electrode active material. In this regard, as a technique for improving the electron conductivity and ion conductivity of the positive electrode active material having an olivine-type crystal structure, it has been studied to provide a conductive carbon cover layer.

Regarding such a technique, heretofore, for example, there have been proposed a method for producing an electrode material precursor having a core-shell structure in which an active material core is coated with carbon, by subjecting an electrode material precursor having a core-shell structure in which an active material core is coated with polyaniline to a heat treatment at 300 to 900°C in a reduction atmosphere (see, for example, Patent Document 1); a lithium iron phosphate cathode material having primary particles of lithium iron phosphate with a conductive carbon cover layer, in which the conductive carbon cover layer has thick layer portions with a thickness of 2 nm or more and thin layer portions with a thickness of less than 2 nm (see, for example, Patent Document 2); electrode material including an agglomerate formed by agglomerating carbonaceous coated electrode active material particles obtained by forming a carbonaceous coat on surfaces of electrode active material particles at a coating rate of 80% or more, in which the carbonaceous coated electrode active material particles include first carbonaceous coated electrode active material particles on which a carbonaceous coat having a film thickness of 0.1 nm or more and 3.0 nm or less and an average film thickness of 1.0 nm or more and 2.0 nm or less is formed and second carbonaceous coated electrode active material particles on which a carbonaceous coat having a film thickness of 1.0 nm or more and 10.0 nm or less and an average film thickness of more than 2.0 nm and 7.0 nm or less is formed (see, for example, Patent Document 3); and the like.

However, in an electrode active material having an olivine-type crystal structure, it has been known that carrier ions exhibit a one-dimensionally high diffusion rate only in a direction of a crystal b-axis inside the material (see, for example, Non-Patent Document 1).

PRIOR ART DOCUMENTS

PATENT DOCUMENTS

Patent Document 1: Japanese Patent Laid-open Publication No. 2010-40357
Patent Document 2: Japanese Patent Laid-open Publication No. 2012-216473
Patent Document 3: Japanese Patent Laid-open Publication No. 2014-146513

NON-PATENT DOCUMENT

Non-Patent Document 1: Gardiner, G. R.; Islam, M. S. Anti-Site Defects and Ion Migration in the LiFe0.5Mn0.5PO4 Mixed-Metal Cathode Material. Chem. Mater. 2010, 22 (3), 1242-1248.

SUMMARY OF THE INVENTION

PROBLEMS TO BE SOLVED BY THE INVENTION

The electron conductivity and ion conductivity can be improved to improve the rate characteristics by forming a carbon layer on the surface of an active material for a secondary battery electrode where the active material has an olivine-type crystal structure. In the electrode using such an active material for a secondary battery electrode, the area where an electrolyte and the active material for a secondary battery electrode is in direct contact with each other is reduced, so that elution of the active material for a secondary battery electrode into an electrolytic solution can be suppressed and the cycle resistance can be improved. From the viewpoint of improving the electron conductivity and the cycle resistance, the thickness of the carbon layer is preferably thick.

On the other hand, from the viewpoint of promoting entry and exit of carrier ions such as lithium in the active material for a secondary battery electrode into and out of the active material for a secondary battery electrode, the thickness of the carbon layer is preferably thin. Although Patent Documents 1 to 3 described above disclose electrode active material particles having a large or small thickness of a carbon layer, the thickness of the carbon layer is randomly changed with respect to the crystal axis in any case, and a phenomenon that carrier ions in the electrode active material having the olivine-type crystal structure exhibit a one-dimensionally high diffusion rate only in the direction of the crystal b-axis is not utilized, and the effect of improving rate characteristics and cycle resistance is insufficient.

In view of such problems, an object of the present invention is to provide an active material for a secondary battery electrode, the active material having excellent rate characteristics and cycle resistance.

SOLUTIONS TO THE PROBLEMS

The present invention mainly has the following constitutions, in order to solve the above-mentioned problems.

An active material for a secondary battery electrode, the active material having an olivine-type crystal structure and having a carbon layer on a surface, in which a ratio of an average thickness of the carbon layer which is present on a plane that is perpendicular to a crystal b-axis to an average thickness of the carbon layer which is present on a plane that is not perpendicular to the b-axis is 0.30 or more and 0.80 or less.

EFFECTS OF THE INVENTION

A secondary battery having excellent rate characteristics and cycle resistance can be obtained by using the active material for a secondary battery electrode of the present invention.

BRIEF DESCRIPTION OF THE DRAWINGS

Fig. 1 shows (a) a transmission electron microscope image and (B) a Fourier transform image of an active material for a secondary battery electrode of the present invention produced in Example 2.
Fig. 2 shows (a) a transmission electron microscope image and (B) a Fourier transform image of an active material for a secondary battery electrode of the related art produced in Comparative Example 2.

EMBODIMENTS OF THE INVENTION

An active material for a secondary battery electrode that has an olivine-type crystal structure of the present invention (hereinafter, simply referred to as "olivine-type active material" in some cases) is characterized in that the active material has a carbon layer on a surface and a ratio of an average thickness of the carbon layer which is present on a plane that is perpendicular to a crystal b-axis to an average thickness of the carbon layer which is present on a plane that is not perpendicular to the b-axis is 0.30 or more and 0.80 or less. As described above, the rate characteristics and the cycle resistance can be improved by forming the carbon layer on the surface of the active material for a secondary battery electrode that has an olivine-type crystal structure. In the present invention, from the crystallographic characteristics of the olivine-type active material, attention is paid to the fact that carrier ions of an electrode such as lithium and sodium (indicating ions entering and exiting from the active material during charging and discharging in the present specification) exhibit a high diffusion coefficient one-dimensionally only in the direction of the crystal b-axis in the olivine-type active material, and the numerical range of the ratio of the average thickness of the carbon layer which is present on the plane that is perpendicular to the crystal b-axis to the average thickness of the carbon layer which is present on the plane that is not perpendicular to the b-axis is limited in order to improve the rate characteristics by decreasing the thickness of the carbon layer and promoting the entry and exit of the carrier ions into and out of the olivine-type active material in the crystal b-axis direction and to improve cycle resistance by increasing the thickness of the carbon layer in other directions. The olivine-type active material of the present invention will be described below.

In the present invention, the olivine-type active material is not particularly limited as long as it has an olivine-type crystal structure, but preferably has a chemical composition represented by general formula $ABXO_4$ (A and B each independently represent one or more kinds of metal elements, and X represents any one or more kinds of elements other than metal elements). A is preferably an alkali metal, B is preferably a transition metal, and X is preferably silicon, phosphorus, or the like. Examples of the chemical composition represented by the general formula $ABXO_4$ include $LiFePO_4$, $LiMnPO_4$, $LiFe_{1-x}Mn_xPO_4$ $(0 < x < 1)$, $LiCoPO_4$, $LiNiPO_4$, $NaFePO_4$, $NaMnPO_4$, $NaCoPO_4$, $NaNiPO_4$, $LiFeSiO_4$, and $NaFeSiO_4$. Two or more kinds of these may be included. Among these, since lithium generally tends to exhibit a high diffusion coefficient, lithium is preferably used as the A site, and thus the rate characteristics can be further improved. Among the olivine-type active materials, lithium manganese iron phosphate tends to have low electron conductivity and lithium ion conductivity, and can more significantly exhibit the effect obtained using the carbon layer in the present invention. For example, as described below, in Example 5 and Comparative Example 4 using lithium iron phosphate, the energy density ratio is improved by 0.06. In Example 1 and Comparative Example 1 using lithium manganese iron phosphate, the energy density ratio is improved by 0.16, and the effect obtained using the carbon layer in the present invention is more significantly exhibited.

The olivine-type active material may have structures (for example, core-shell structures) each having a different chemical composition inside primary or higher order particles. The olivine-type active material may contain a doping element.

The olivine-type active material of the present invention has a carbon layer on a surface. The carbon layer may cover at least a part of the surface of the olivine-type active material, and preferably covers 80 area% or more of the surface. The carbon layer may have a functional group such as a carbonyl group or a hydroxyl group on the surface thereof. The content of the carbon layer in the olivine-type active material is preferably 1 wt% or more from the viewpoint of further improving electron conductivity to further improve rate characteristics. On the other hand, the content thereof is preferably 6 wt% or less from the viewpoint of suppressing a side reaction between the carbon layer and the olivine-type active material to further improve cycle resistance.

Here, the content of the carbon layer in the olivine-type active material can be measured, for example, using a carbon/sulfur simultaneous quantitative analyzer EMIA-920V (manufactured by HORIBA, Ltd.). The content of the carbon layer can be adjusted in a desired range, for example, by adjusting the addition amount of the carbon source to be added in the method for producing an olivine-type active material described below.

In the olivine-type active material of the present invention, the ratio of the average thickness of the carbon layer which is present on the plane that is perpendicular to the crystal b-axis to the average thickness of the carbon layer which is present on the plane that is not perpendicular to the b-axis (the average thickness of the carbon layer on the perpendicular plane/the average thickness of the carbon layer on the plane that is not perpendicular) is 0.30 or more and 0.80 or less. When the value of such a ratio is smaller than 0.30, the carbon layer on the plane perpendicular to the crystal b-axis becomes too thin, or the carbon layer on the plane not perpendicular to the crystal b-axis. In the former case, it is difficult to obtain the electron conductivity improving effect obtained using the carbon layer, and in the latter case, the weight ratio of the carbon layer in the olivine-type active material becomes too large. In both cases, the rate characteristics of a secondary battery are deteriorated. On the other hand, when the value of such a ratio is larger than 0.80, the carbon layer on the plane perpendicular to the crystal b-axis becomes too thick, or the carbon layer on the plane not perpendicular to the crystal b-axis becomes too thin. In the former case, it is difficult to obtain the effect of promoting entry and exit of carrier ions into and out of the olivine-type active material in the b-axis direction, and the rate characteristics of a secondary battery are deteriorated. In the latter case, it is difficult to obtain the cycle resistance improving effect obtained using the carbon layer, and the cycle resistance of a secondary battery is deteriorated.

The average thickness of the carbon layer on the plane perpendicular to the crystal b-axis is preferably 0.6 nm or more and preferably 2.0 nm or less, from the viewpoint of further improving the rate characteristics of a secondary battery. In the olivine-type active material of the present invention, when the olivine-type active material particle surface is regarded as a polyhedron, the thickness of the carbon layer in the same plane is preferably uniform, the electric field to be applied to the olivine-type active material surface becomes uniform in the electrode reaction accompanying the charging and discharging of a secondary battery, and thus the cycle resistance can be further improved. In particular, the thickness of the carbon layer on the plane perpendicular to the crystal b-axis where the thickness of the carbon layer decreases is preferably uniform, and the standard deviation of the thickness of the carbon layer on the plane perpendicular to the crystal b-axis is preferably 0.3 nm or less.

Here, the average thickness of the carbon layer on the olivine-type active material surface on different crystal planes can be measured using a transmission electron microscope. Specifically, a multiple wave interference image of the olivine-type active material is measured under the conditions of an acceleration voltage of 300 kV and a magnification of 2,000,000 times. The thickness of the carbon layer is measured at 20 or more measurement points selected equally on the outer periphery of the particles of the olivine-type active material. Information on the crystal orientation can be obtained by performing Fourier transform on the obtained lattice image, measuring the distance from the origin to a bright point, and calculating the corresponding d value. The crystal orientation perpendicular to the surface of the particle is calculated at each measurement point at which the thickness of the carbon layer is measured. When the angle formed between the crystal orientation perpendicular to the surface of the particle and the crystal b-axis is 20 degrees or less, the corresponding measurement point is regarded to be present on the plane perpendicular to the crystal b-axis. When the angle is larger than 20 degrees, the measurement point is regarded not to be present on the plane perpendicular to the crystal b-axis. This processing is performed for all the measurement points, and the average thickness and the standard deviation can be calculated for each of the carbon layer which is present on the plane that is perpendicular to the crystal b-axis and the carbon layer which is present on the plane that is not perpendicular to the crystal b-axis. The above-described ratio value can be calculated from the obtained average thickness.

Examples of the method for setting the ratio of the average thickness of the carbon layer and the standard deviation in the above ranges include a method for obtaining an olivine-type active material by a production method described below.

The crystallite diameter of the olivine-type active material of the present invention is preferably 60 nm or less. Since the olivine-type active material generally has low electron conductivity and ion conductivity, the voltage drop tends to be large under the condition in which the charge and discharge current is large. By setting the crystallite diameter to 60 nm or less, the diffusion distance of electrons and carrier ions in the crystallite is shortened, and thus the rate characteristics can be further improved. Since the active material particles having a small crystallite diameter have a large specific area, the effect obtained with the average thickness ratio of the carbon layer in the present invention can be more significantly exhibited.

Here, the crystallite diameter of the olivine-type active material can be calculated by performing powder X-ray diffraction measurement on a powder sample of the olivine-type active material under the condition that the diffraction angle $2\theta$ is set to 10 degrees or more and 70 degrees or less and performing Rietveld analysis on the obtained diffraction pattern. The olivine-type active material of the present invention may be directly measured, or in the case of a secondary battery described below, an olivine-type active material obtained by grinding an electrode mixture peeled from a secondary battery electrode may be measured. The crystallite diameter of the olivine-type active material can be adjusted in a desired range, for example, by adjusting a mixing ratio of water and an organic solvent used as a solvent, a total amount of the solvent with respect to a raw material, a synthesis temperature, a firing temperature, and the like in a method for producing an olivine-type active material described below.

Among the olivine-type active materials in the present invention, the crystallinity and particle shape of lithium manganese iron phosphate can be evaluated by a ratio $I_{20}/I_{29}$ of a peak intensity at 20° to a peak intensity at 29° and a ratio $I_{35}/I_{29}$ of a peak intensity at 35° to the peak intensity at 29°, which are obtained by X-ray diffraction. When $I_{20}/I_{29}$ is 0.88 or more and 1.05 or less, this means that lithium manganese iron phosphate is not oriented extremely in the b-axis direction and the shape of a particle is closer to a sphere than a plate shape. By making the shape of a particle close to a spherical shape, it becomes possible to alleviate the strain of the crystal lattice caused by extracting/inserting a lithium ion at the time of charge-discharge, and the rate characteristics and the cycle resistance can be further improved. When $I_{35}/I_{29}$ is 1.05 or more and 1.20 or less, this means that the crystal orientation property of lithium manganese iron phosphate is further lowered, the crystal have more homogeneous crystal orientation, and the shape of a particle is further close to a spherical shape. Therefore, it becomes possible to alleviate the strain of the crystal lattice caused by extracting/inserting a carrier ion at the time of charge-discharge, and the rate characteristics and the cycle resistance can be further improved. Examples of the method for setting $I_{20}/I_{29}$ and $I_{35}/I_{29}$ in the above ranges include a method for obtaining lithium manganese iron phosphate by a production method described below.

Next, the method for producing an olivine-type active material of the present invention will be described. The olivine-type active material of the present invention can be obtained by any methods such as a solid phase method and a liquid phase method. The liquid phase method is preferred since the crystallite diameter is easily adjusted in the above-described preferable range. As the liquid phase, water, and in addition, an organic solvent are also preferably used for reducing the crystallite to the size of a nanoparticle, and examples of the solvent include alcohol-based solvents such as ethylene glycol, diethylene glycol, triethylene glycol, tetraethylene glycol, 2-propanol, 1,3-propanediol, and 1,4-butanediol, and dimethyl sulfoxide. Two or more kinds of these may be used. In the synthesis process, pressurizing may be performed for improvement of the crystallinity of the particle. The chemical composition of the olivine-type active material can be adjusted in a desired range by the charging ratio of raw materials. In the synthesis of lithium manganese iron phosphate by the liquid phase method, it is preferable to add a solution containing the remaining raw material while stirring a solution containing a part of the raw material at a high speed and heat the solution to the synthesis temperature without pressurization while maintaining the high-speed stirring state, and it is possible to easily adjust the peak intensity ratios $I_{20}/I_{29}$ and $I_{35}/I_{29}$ obtained by X-ray diffraction of lithium manganese iron phosphate in the above-described preferable range.

When olivine-type active material primary particles are obtained by the liquid phase method, the crystallite diameter can be adjusted in a desired range, for example, by conditions such as a mixing ratio of water and an organic solvent in a solvent, a concentration of a synthesis solution, a synthesis temperature, and a charging ratio of raw materials. Typically, in order to increase the crystallite diameter, it is effective to increase the ratio of water in the solvent, increase the concentration of the synthesis solution, increase the synthesis temperature, and the like.

As a carbon coating method for forming a carbon layer on the olivine-type active material obtained by the liquid phase method, a method of mixing a powder including olivine-type active material primary particles and/or secondary particles, or a slurry containing these with a carbon source, and then firing the mixture in an inert gas atmosphere is preferred. Examples of the carbon source include saccharides such as glucose, sucrose, trehalose, maltose, dextrin hydrate, and cyclodextrin, organic acids such as citric acid, malic acid, succinic acid, fumaric acid, and maleic acid, organic polymers such as polyaniline, polyacrylonitrile, polyvinyl alcohol, and polyvinylpyrrolidone, and crude oils such as coal tar, pitch, and asphalt. Two or more kinds of these may be used. Among these, when only saccharides and organic polymers are used as the carbon source, the standard deviation of the thickness of the carbon layer can be easily adjusted in the above-described preferable range.

As a method of mixing the olivine-type active material and the carbon source, it is preferable that the carbon source and the olivine-type active material are dissolved or dispersed in a medium such as water, ethanol, acetonitrile, N-methylpyrrolidone, or dimethyl sulfoxide, and mixed and dispersed using a mixing device such as a disper, a jet mill, a high shear mixer, or an ultrasonic homogenizer.

In order to set the average thickness ratio of the carbon layer to the crystal b-axis direction in the above-described range, it is preferable to instantaneously dry a slurry containing the olivine-type active material and the carbon source prior to firing to obtain a precursor of the olivine-type active material in which the olivine-type active material and the carbon source are densely mixed, and specifically, it is preferable to dry the slurry using a spray dryer.

Examples of the inert gas used at the time of firing include nitrogen and argan. In order to remove the gas generated from the mixture of the olivine-type active material and the carbon source to the outside of the system during firing, it is preferable to allow the inert gas to flow. The firing temperature is preferably 500°C or higher and 1000°C or lower, and the firing time is preferably 30 minutes or longer and 24 hours or shorter.

In order to set the average thickness ratio of the carbon layer to the crystal b-axis direction in the above-described range, it is preferable that a plurality of kinds of compounds each having a different melting point are combined as a carbon source, calcination is performed at a temperature between the melting point of a compound having a low melting point and the melting point of a compound having a high melting point within a range of 1 hour or longer and 24 hours or shorter prior to firing, and firing is then performed under the above-described conditions. By adjusting the mixing ratio of the carbon sources each having a different melting point, the average thickness ratio of the carbon layer to the crystal b-axis direction can be adjusted. In this case, the addition amount of a compound having the highest melting point is preferably set to 0.50 times or more and 5.0 times or less the total addition amount of compounds having a melting point lower than that of the compound.

When the primary particle diameter of the olivine-type active material is smaller than 1 $\mu$m, the active material is preferably handled as secondary particles in which primary particles are aggregated, and the secondary particle diameter is preferably 3 $\mu$m or more from the viewpoint of handleability of a paste in a method for producing a secondary battery electrode described below. On the other hand, the secondary particle diameter of the olivine-type active material is preferably 40 $\mu$m or less from the relationship with the thickness of a mixture later described below.

The secondary particle diameter of the olivine-type active material refers to an arithmetic average value of the particle diameter of the secondary particles, and can be measured using a scanning electron microscope. Specifically, an electrode is magnified and observed at a magnification of 3,000 times using a scanning electron microscope, and the secondary particle diameters of 100 secondary particles randomly selected are measured. The secondary particle diameter of the olivine-type active material can be determined by calculating the number average value thereof. When only less than 100 secondary particles are observed in one observation field, observation is performed at another point of the sample until the cumulative number of observed secondary particles reaches 100. The secondary particle diameter of the secondary particles of the olivine-type active material as a raw material at the time of electrode production may be similarly measured using a scanning electron microscope.

As a method for producing olivine-type active material secondary particles, from the viewpoint of narrowing the particle size distribution of the secondary particles as much as possible, a method of drying and granulating a dispersion including olivine-type active material primary particles using a spray dryer is preferred. The secondary particle diameter of the olivine-type active material can be easily adjusted in a desired range, for example, by changing the weight concentration of an olivine-type active material aqueous dispersion as a raw material in the above-described method for producing an olivine-type active material.

The olivine-type active material of the present invention is suitably used for a secondary battery electrode. The electrode for a secondary battery of the present invention preferably has a mixture layer containing an additive such as a binder or a conductive auxiliary agent together with the olivine-type active material of the present invention on a current collector such as an aluminum foil, a copper foil, a stainless steel foil, or a platinum foil. The electrode may contain other active materials such as an active material having a layered oxide type crystal structure and an active material having a spinel type crystal structure together with the olivine-type active material of the present invention.

Examples of the binder include polyvinyldene fluoride and styrene-butadiene rubber. Two or more kinds of these may be included.

The content of the binder in an electrode mixture layer is preferably 0.3 wt% or more and 10 wt% or less. By setting the content of the binder to 0.3 wt% or more, the shape of a coating film when the coating film is formed can be easily maintained by the binding effect of the binder. On the other hand, by setting the content of the binder to 10 wt% or less, an increase in resistance in the electrode can be suppressed.

Examples of the conductive auxiliary agent include acetylene black, ketjen black, a carbon fiber, a carbon nanotube, graphene, and reduced graphene oxide. Two or more kinds of these may be included.

The content of the conductive auxiliary agent in the mixture layer is preferably 0.3 wt% or more and 10 wt% or less. By setting the content of the conductive auxiliary agent to 0.3 wt% or more, the conductivity of an electrode is improved, and thus the electronic resistance can be reduced. On the other hand, by setting the content of the conductive auxiliary agent to 10 wt% or less, inhibition of movement of carrier ions of a battery by the conductive auxiliary agent is suppressed, and thus the ion conductivity can be further improved.

In order to increase the energy density of a secondary battery, the olivine-type active material is preferably contained in the electrode mixture layer at a ratio as high as possible, and the total content of the olivine-type active material and other active materials in the electrode mixture layer is preferably 80 wt% or more and more preferably 85 wt% or more.

The thickness of the electrode mixture layer is preferably 10 $\mu$m or more and 200 $\mu$m or less. By setting the thickness of the mixture layer to 10 $\mu$m or more, the ratio of a current collector to an electrode is suppressed, and thus the energy density can be further improved. On the other hand, by setting the thickness of the mixture layer to 200 $\mu$m or less, the charge-discharge reaction is rapidly advanced to the entire mixture layer, and thus high-speed charge-discharge characteristics can be improved.

The secondary battery electrode can be obtained, for example, by applying a paste in which the above-described olivine-type active material secondary particles are dispersed in a dispersion medium onto a current collector, drying the paste, and pressurizing the paste to form a mixture layer. As a method for producing a paste, it is preferable to mix and solid-knead the above-described olivine-type active material secondary particles and, as necessary, an additive such as a conductive auxiliary agent, a binder, and a dispersion medium such as N-methylpyrrolidinone, and to adjust the viscosity by adding a dispersion medium such as water or N-methylpyrrolidinone. The solid content concentration of the paste can be appropriately selected according to the coating method. From the viewpoint of making the coating film thickness uniform, the solid content concentration thereof is preferably 30 wt% or more and 80 wt% or less. The respective materials of the paste may be mixed at one time, or may be added and mixed in order while repeating solid-kneading in order to uniformly disperse the respective materials in the paste. As a slurry kneading apparatus, from the viewpoint that uniform kneading can be performed, a planetary mixer or a thin-film spin-type high-speed mixer is preferred.

A secondary battery of the present invention preferably includes a counter electrode, a separator, and an electrolytic solution, in addition to the above-described electrode. Examples of the shape of the battery include a coin type, a square type, a winding type, and a laminate type, and the shape thereof can be appropriately selected according to the purpose of use. Examples of a material constituting the counter electrode include graphite, lithium titanate, silicon oxide, and lithium cobaltate. Also regarding the separator and the electrolytic solution, any separator or electrolytic solution can be appropriately selected and used.

The secondary battery of the present invention can be obtained, for example, by laminating the secondary battery electrode with a counter electrode with a separator interposed therebetween in a dry environment having a dew point of -50°C or lower, and adding an electrolytic solution.

EXAMPLES

Hereinafter, the present invention will be described specifically by means of Examples; however, the present invention is not limited only to these Examples. First, the evaluation method in each Example will be described.

[Measurement A] Average Thickness of Carbon Layer and Standard Deviation

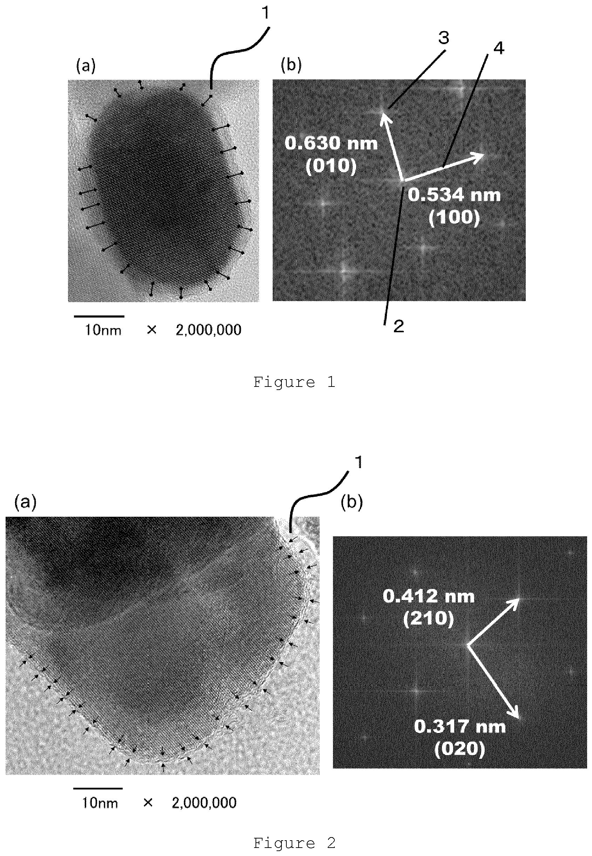

Multiple wave interference images of powder samples including olivine-type active material secondary particles obtained in each of Examples and Comparative Examples were measured using a transmission electron microscope under the conditions of an acceleration voltage of 300 kV and a magnification of 2,000,000 times. Describing with reference to the drawings, in Fig. 1(a), the thickness of the carbon layer was measured at 21 selection points selected substantially equally on the outer periphery of the observed primary particles. At each measurement point at which the thickness of the carbon layer was measured, the distance from the origin to a bright point was measured in Fig. 1(b) in which the two-dimensional Fourier transform was performed on the obtained lattice image, the corresponding d value was calculated (in Fig. 1(b), 0.630 nm and 0.534 nm), the crystal orientation was assigned by applying the closest plane spacing, and the crystal orientation perpendicular to the surface of the particle was calculated.

In Fig. 1(b), 0.630 nm corresponds to (010), and 0.534 nm corresponds to (100). The crystal b-axis is parallel to (010).

In the present specification, the index indicated in parentheses as the crystal orientation represents a plane in normal crystallography, but in the present specification, indicates a direction of the normal line of the plane. The direction of the normal line of the plane can be expressed by primitive translation vectors $k_1$, $k_2$, and $k_3$ (arrow notation is omitted) of the reciprocal lattice corresponding to the crystal lattice shown in the following mathematical formula.

[Mathematical Formula 1]

$$\vec{k_1} = 2\pi \, \frac{\vec{x_2} \times \vec{x_3}}{\vec{x_1} \cdot (\vec{x_2} \times \vec{x_3})}$$

$$\vec{k_2} = 2\pi \, \frac{\vec{x_3} \times \vec{x_1}}{\vec{x_1} \cdot (\vec{x_2} \times \vec{x_3})}$$

$$\vec{k_3} = 2\pi \, \frac{\vec{x_1} \times \vec{x_2}}{\vec{x_1} \cdot (\vec{x_2} \times \vec{x_3})}$$

(However, $x_1$, $x_2$, and $x_3$ (arrow notation is omitted) represent primitive translation vectors parallel to the a-axis, the b-axis, and the c-axis of the crystal lattice, respectively.)

When the angle formed between the crystal orientation perpendicular to the surface of the particle and the crystal b-axis was 20 degrees or less, the corresponding measurement point was regarded to be present on the plane perpendicular to the crystal b-axis, and when the angle was larger than 20 degrees, the corresponding measurement point was regarded not to be present on the plane perpendicular to the crystal b-axis. In Fig. 1(b), the angle formed between (010) and the b-axis is 0 degrees, and the angle formed between (100) and the b-axis is 90 degrees.

When there is only one or less point at which the angle formed with the crystal b-axis on the observed primary particles was 20 degrees or less, the b-axis was regarded to be in a direction perpendicular to the observation surface of the microscope image, and another primary particle was observed.

In this way, the average thickness X of the carbon layer which is present on the plane that is perpendicular to the crystal b-axis, the average thickness Y of the carbon layer which is present on the plane that is not perpendicular to the crystal b-axis, and the standard deviation of the thickness of the carbon layer which is present on the plane that is perpendicular to the crystal b-axis were calculated.

[Measurement B] Crystallite Diameter and X-Ray Diffraction Peak Intensity Ratio

A powder sample including olivine-type active material secondary particles obtained in each of Examples and Comparative Examples was subjected to powder X-ray diffraction measurement using an X-ray diffractometer D8 ADVANCE manufactured by Bruker AXS K.K. under the condition of a diffraction angle $2\theta$ of 10 degrees or more and 70 degrees or less. Based on the obtained diffraction pattern, the crystallite diameter of the olivine-type active material was calculated by performing Rietveld analysis using analyzing software TOPAS manufactured by Bruker AXS K.K.

The analysis was performed assuming an olivine-type crystal structure as a starting structure, and the active material was regarded to have the olivine-type crystal structure when a GOF (= $(R_{wp}/R_{exp})^2$) value obtained as the result of the analysis was less than 4.0. Using the analyzing software for powder X-ray diffraction DIFFRAC.EVA manufactured by Bruker AXS K.K., the background removal (coefficient 1.77) was performed and peak intensities were read to calculate the peak intensity ratios. Values obtained by dividing each of peak intensities at 20° and 35° by the peak intensity at 29° were designated as $I_{20}/I_{29}$ and $I_{35}/I_{29}$, respectively.

[Measurement C] Rate Characteristics of Secondary Battery

A 2032 coin battery was produced in which the electrode plate, obtained in each of Examples and Comparative Examples, cut out to have a diameter of 15.9 mm was used as a positive electrode, a lithium foil cut out to have a diameter of 16.1 mm and a thickness of 0.2 mm was used as a negative electrode, "SETELA" (registered trademark) was used as a separator, and a solution of ethylene carbonate : diethyl carbonate = 3 : 7 (volume ratio) containing 1 M of $LiPF_6$ was used as an electrolytic solution.

The produced 2032 coin battery was charged and discharged twice at a cutoff voltage of 2.5 V and a maximum charge voltage of 4.3 V at a 0.1 C rate, and subsequently charged and discharged twice at a 3 C rate. For each charge/discharge rate, the discharge energy was measured from the second discharge, a ratio obtained by dividing the energy at a 3 C rate by the energy at a 0.1 C rate was calculated, and the rate characteristics were evaluated.

[Measurement D] Cycle Resistance of Secondary Battery

A stacked laminate cell having a capacity of 1 Ah was produced using the electrode plate obtained in each of Examples and Comparative Examples, a commercially available carbon-based negative electrode (negative electrode active material: artificial graphite MAG manufactured by Hitachi Chemical Co., Ltd.) as a negative electrode, "SETELA" (registered trademark) as a separator, and, as an electrolytic solution, a solution of ethylene carbonate : diethyl carbonate = 3 : 7 (volume ratio) containing 1 M of $LiPF_6$. The number of the positive electrodes (size: 70 mm × 40 mm) to be stacked was 7, and the number of the negative electrodes (size: 74 mm × 44 mm) to be stacked was 8. The capacity ratio (NP ratio) of the positive electrode to the opposite negative electrode was 1.05.

The produced laminate type cell was charged and discharged three times at a 0.1 C rate in an environment of 25°C, and then a cycle test of repeating charge and discharge at a 1 C rate in an environment of 55°C was performed. The energy density in the first discharge test in an environment at 55°C was set to 100%, the number of cycles until the energy density fell below 80% was measured, and the cycle resistance was evaluated.

[Example 1]

(Step 1: Production of Olivine-Type Active Material Secondary Particles)

In 16 g of pure water, 60 mmol of lithium hydroxide monohydrate was dissolved, after which 104 g of diethylene glycol was added thereto to prepare an aqueous lithium hydroxide/diethylene glycol solution. To the obtained aqueous lithium hydroxide/diethylene glycol solution stirred at 2000 rpm with a homodisper (homodisper Model 2.5 manufactured by PRIMIX Corporation), an aqueous solution obtained by dissolving 20 mmol of phosphoric acid (an aqueous 85% solution), 16 mmol of manganese(II) sulfate monohydrate, and 4 mmol of iron(II) sulfate heptahydrate in 10 g of pure water was added to obtain an olivine-type-structure lithium manganese iron phosphate nanoparticle precursor. The obtained precursor solution was heated to 110°C and held at the temperature for 2 hours to obtain lithium manganese iron phosphate as a solid matter. Pure water was added to the obtained particles, and solvent removal with a centrifugal separator was repeated to wash the particles. The synthesis was repeated until the weight of lithium manganese iron phosphate obtained after being washed became 10 g.

To 10 g of the obtained lithium manganese iron phosphate, 1.0 g of glucose (melting point 146°C) and 0.75 g of polyvinyl alcohol (melting point 300°C) as carbon sources, and 40 g of pure water were added and mixed, and using a spray drying apparatus (ADL-311-A manufactured by Yamato Scientific Co., Ltd.), the particles were granulated under the conditions of a nozzle diameter of 400 $\mu$m, a drying temperature of 150°C, and an atomizing pressure of 0.2 MPa. The obtained granulated body was subjected to calcining at 175°C for 1 hour using a firing furnace and then to firing at 700°C for 1 hour in a nitrogen atmosphere to obtain a powder sample including lithium manganese iron phosphate secondary particles.

(Step 2: Production of Electrode Plate)

Acetylene black (Li-400 manufactured by Denka Company Limited) and a binder (KF POLYMER L#9305 manufactured by KUREHA CORPORATION) were mixed, then the lithium manganese iron phosphate secondary particles obtained by the above-described method were added, and the resulting mixture was solid-kneaded in a mortar. At that time, the weight ratio of each material contained, the lithium manganese iron phosphate secondary particles : acetylene black : the binder, was set to 90 : 5 : 5. Then, the solid content concentration was adjusted to 48 wt% by adding N-methylpyrrolidinone to obtain a slurry electrode paste. N-methylpyrrolidinone was added to the obtained paste until the paste became flowable, and the paste was treated for 30 seconds under a stirring condition of 40 m/sec using a thin-film spin-type high-speed mixer (manufactured by PRIMIX Corporation "FILMIX" (registered trademark) 40-L type).

The resulting electrode paste was applied to an aluminum foil (thickness: 18 $\mu$m) using a doctor blade (300 $\mu$m), dried at 80°C for 30 minutes, and then pressed to produce an electrode plate.

[Example 2]

Lithium manganese iron phosphate secondary particles and an electrode plate were produced in the same manner as in Example 1, except that the amount of glucose used was set to 1.50 g and the amount of polyvinyl alcohol used was set to 1.10 g in Step 1. Fig. 1(a) shows a transmission electron microscope image of the obtained lithium manganese iron phosphate secondary particles, and Fig. 1(b) shows a Fourier transform image thereof. In Fig. 1(a), reference numeral 1 denotes the thickness of the carbon layer at each measurement point.

[Example 3]

Lithium manganese iron phosphate secondary particles and an electrode plate were produced in the same manner as in Example 1, except that an undiluted vacuum heavy oil solution having a viscosity at 20°C of 600 mPa·sec (as measured with a B-type viscometer at a rotational speed of 6 rpm) was used instead of glucose in Step 1.

[Example 4]

Lithium manganese iron phosphate secondary particles and an electrode plate were produced in the same manner as in Example 1, except that the addition amount of diethylene glycol was set to 60 g in Step 1.

[Example 5]

Olivine-type active material secondary particles and an electrode plate were produced in the same manner as in Example 1, except that the addition amount of iron(II) sulfate heptahydrate was set to 20 mmol and manganese(II) sulfate monohydrate was not added in Step 1.

[Example 6]

To 150 g of pure water, 200 g of dimethyl sulfoxide and 390 mmol of lithium hydroxide monohydrate were added. To the resulting solution, 120 mmol of phosphoric acid was further added using an 85 wt% phosphoric acid aqueous solution, and 84 mmol of manganese(II) sulfate monohydrate and 36 mmol of iron(II) sulfate heptahydrate were further added. The resulting solution was transferred to an autoclave and kept heated for 4 hours so that the inside of the container was maintained at 150°C. After the heating, the supernatant of the solution was removed to obtain lithium manganese iron phosphate as a precipitate. The obtained lithium manganese iron phosphate was dispersed in pure water, and then the operation of removing the supernatant by centrifugation was repeated five times to perform washing. A powder sample including lithium manganese iron phosphate secondary particles was obtained in the same manner as in Example 1, with respect to 10 g of the obtained lithium manganese iron phosphate. Thereafter, olivine-type active material secondary particles and an electrode plate were produced in the same manner as in Example 1.

[Comparative Example 1]

Lithium manganese iron phosphate secondary particles and an electrode plate were produced in the same manner as in Example 1, except that the addition amount of glucose was set to 0.25 g and the addition amount of polyvinyl alcohol was set to 1.5 g in Step 1.

[Comparative Example 2]

A granulated body was obtained in the same manner as in Example 1, the addition amount of glucose was set to 1.75 g and polyvinyl alcohol was not added in Step 1. The obtained granulated body was subjected to firing in a firing furnace at 700°C for 1 hour under a nitrogen atmosphere to obtain a powder sample including lithium manganese iron phosphate secondary particles. Thereafter, an electrode plate was produced in the same manner as in Step 2 of Example 1. Fig. 2(a) shows a transmission electron microscope image of the obtained lithium manganese iron phosphate nanoparticle granulated body, and Fig. (b) shows (b) a Fourier transform image thereof.

[Comparative Example 3]

To 150 g of pure water, 200 g of dimethyl sulfoxide and 390 mmol of lithium hydroxide monohydrate were added. To the resulting solution, 120 mmol of phosphoric acid was further added using an 85 wt% phosphoric acid aqueous solution, and 84 mmol of manganese(II) sulfate monohydrate and 36 mmol of iron(II) sulfate heptahydrate were further added. The resulting solution was transferred to an autoclave and kept heated for 4 hours so that the inside of the container was maintained at 150°C. After the heating, the supernatant of the solution was removed to obtain lithium manganese iron phosphate as a precipitate. The obtained lithium manganese iron phosphate was dispersed in pure water, and then the operation of removing the supernatant by centrifugation was repeated five times to perform washing. To 10 g of the obtained lithium manganese iron phosphate, 10 g of pure water and 0.75 g of glucose were added and stirred to obtain a lithium manganese iron phosphate dispersion, and using a spray drying apparatus (ADL-311-A manufactured by Yamato Scientific Co., Ltd.), the particles were granulated under the conditions of a nozzle diameter of 400 $\mu$m, a drying temperature of 150°C and an atomizing pressure of 0.2 MPa. The obtained granulated particles were subjected to firing in a firing furnace at 700°C for 1 hour under a nitrogen atmosphere to obtain a powder sample including lithium manganese iron phosphate secondary particles. Thereafter, an electrode plate was produced in the same manner as in Step 2 of Example 1.

[Comparative Example 4]

Olivine-type active material secondary particles and an electrode plate were produced in the same manner as in Comparative Example 3, except that manganese(II) sulfate monohydrate was not added and the addition amount of iron(II) sulfate heptahydrate was set to 120 mmol.

[Comparative Example 5]

To 150 g of pure water, 200 g of dimethyl sulfoxide and 390 mmol of lithium hydroxide monohydrate were added. To the resulting solution, 120 mmol of phosphoric acid was further added using an 85 wt% phosphoric acid aqueous solution, and 84 mmol of manganese(II) sulfate monohydrate and 36 mmol of iron(II) sulfate heptahydrate were further added. The resulting solution was transferred to an autoclave and kept heated for 4 hours so that the inside of the container was maintained at 150°C. After the heating, the supernatant of the solution was removed to obtain lithium manganese iron phosphate as a precipitate. The obtained lithium manganese iron phosphate was dispersed in pure water, and then the operation of removing the supernatant by centrifugation was repeated five times to perform washing.
To 10 g of the obtained lithium manganese iron phosphate, 4.0 wt% of an undiluted vacuum heavy oil solution having a viscosity at 20°C of 600 mPa·sec (as measured with a B-type viscometer at a rotational speed of 6 rpm) with respect to the weight of the lithium manganese iron phosphate was added, and then further precisely mixed by a jet mill (manufactured by Sugino Machine Limited), and this mixture was fired at 700°C for 3 hours.

[Comparative Example 6]

A granulated body was obtained in the same manner as in Example 1, the addition amount of glucose was set to 2.50 g and polyvinyl alcohol was not added in Step 1. The obtained granulated body was subjected to firing in a firing furnace at 700°C for 1 hour under a nitrogen atmosphere to obtain a powder sample including lithium manganese iron phosphate secondary particles. This powder sample and the powder sample obtained in the same manner as in Comparative Example 2 were mixed with a mortar to have a weight ratio of 1 : 1, thereby obtaining an olivine-type active material powder. Thereafter, an electrode plate was produced in the same manner as in Step 2 of Example 1.
Table 1 shows the evaluation results of each Example and Comparative Example.

[Table 1]

| | Active material chemical composition | Carbon layer | | | | Crystallite diameter (nm) | $I_{20}/I_{29}$ | $I_{35}/I_{29}$ | Rate characteristics | Cycle resistance |
| | | Average thickness X (nm) | Average thickness Y (nm) | Average thickness ratio X/Y | Standard deviation of average thickness X (nm) | | | | Energy density ratio (3 C/0.1 C) | Number of cycles (times) |
|---|---|---|---|---|---|---|---|---|---|---|
| Example 1 | $LiMn_{0.8}Fe_{0.2}PO_4$ | 1.76 | 2.73 | 0.64 | 0.24 | 57 | 1. 01 | 1.14 | 0.91 | 331 |
| Example 2 | $LiMn_{0.8}Fe_{0.2}PO_4$ | 2.24 | 4.51 | 0.50 | 0.27 | 55 | 1. 01 | 1.12 | 0.88 | 325 |
| Example 3 | $LiMn_{0.8}Fe_{0.2}PO_4$ | 1.84 | 2.94 | 0.63 | 0.45 | 53 | 1. 01 | 1.13 | 0.90 | 268 |
| Example 4 | $LiMn_{0.8}Fe_{0.2}PO_4$ | 1.74 | 2.81 | 0.62 | 0.25 | 82 | 1. 02 | 1.13 | 0.87 | 305 |
| Example 5 | $LiFePO_4$ | 1.69 | 2.43 | 0.70 | 0.23 | 92 | 1. 01 | 1.14 | 0.90 | 335 |
| Example 6 | $LiMn_{0.7}Fe_{0.3}PO_4$ | 1. 54 | 2.75 | 0.56 | 0.21 | 57 | 1. 09 | 0.88 | 0.88 | 296 |
| Comparative Example 1 | $LiMn_{0.8}Fe_{0.2}PO_4$ | 0.65 | 2.56 | 0.25 | 0.15 | 53 | 1. 02 | 1.13 | 0.75 | 301 |
| Comparative Example 2 | $LiMn_{0.8}Fe_{0.2}PO_4$ | 1.65 | 1. 58 | 1. 04 | 0.16 | 55 | 1. 01 | 1.14 | 0.74 | 275 |
| Comparative Example 3 | $LiMn_{0.7}Fe_{0.3}PO_4$ | 0.57 | 0.53 | 1.08 | 0.21 | 54 | 1. 02 | 0.85 | 0.76 | 240 |
| Comparative Example 4 | $LiFePO_4$ | 1.56 | 1. 43 | 1.09 | 0.24 | 96 | 1. 01 | 0.83 | 0.84 | 295 |
| Comparative Example 5 | $LiMn_{0.7}Fe_{0.3}PO_4$ | 2.10 | 2.16 | 0.97 | 0.52 | 57 | 1. 11 | 0.89 | 0.80 | 252 |
| Comparative Example 6 | $LiMn_{0.8}Fe_{0.2}PO_4$ (thin layer) | 1.65 | 1. 58 | 1. 04 | 0.16 | 55 | 1. 01 | 1.14 | 0.71 | 280 |
| | $LiMn_{0.8}Fe_{0.2}PO_4$ (thick layer) | 3.15 | 2.85 | 1.11 | 0.25 | | | | | |

EP 4 099 447 A1

DESCRIPTION OF REFERENCE SIGNS

1: Thickness of carbon layer at each measurement point
2: Origin
3: Bright point
4: Distance from origin to bright point

**Claims**

1. An active material for a secondary battery electrode, the active material having an olivine-type crystal structure and having a carbon layer on a surface, wherein a ratio of an average thickness of the carbon layer which is present on a plane that is perpendicular to a crystal b-axis to an average thickness of the carbon layer which is present on a plane that is not perpendicular to the b-axis is 0.30 or more and 0.80 or less.

2. The active material for a secondary battery electrode according to claim 1, wherein the average thickness of the carbon layer which is present on the plane that is perpendicular to the crystal b-axis is 2.0 nm or less.

3. The active material for a secondary battery electrode according to claim 1 or 2, wherein a standard deviation of a thickness of the carbon layer which is present on the plane that is perpendicular to the crystal b-axis is 0.3 nm or less.

4. The active material for a secondary battery electrode according to any one of claims 1 to 3, wherein a crystallite diameter is 60 nm or less.

5. The active material for a secondary battery electrode according to any one of claims 1 to 4, wherein lithium occupies at least a part of an A site of the olivine-type crystal structure represented by general formula $ABXO_4$ (A and B each independently represent one or more kinds of metal elements, and X represents any one or more kinds of elements other than metal elements).

6. The active material for a secondary battery electrode according to any one of claims 1 to 5, wherein the active material is lithium manganese iron phosphate.

7. The active material for a secondary battery electrode according to claim 6, wherein a ratio $I_{20}/I_{29}$ of a peak intensity at 20° to a peak intensity at 29° obtained by X-ray diffraction is 0.88 or more and 1.05 or less, and a ratio $I_{35}/I_{29}$ of a peak intensity at 35° to the peak intensity at 29° is 1.05 or more and 1.20 or less.

8. A secondary battery obtained by using the active material for a secondary battery electrode according to any one of claims 1 to 7.

Figure 1

Figure 2

## INTERNATIONAL SEARCH REPORT

| | International application No. |
|---|---|
| | PCT/JP2020/045410 |

**A. CLASSIFICATION OF SUBJECT MATTER**
H01M 4/58(2010.01)i; C01B 25/45(2006.01)i; H01M 4/36(2006.01)i
FI: H01M4/58; C01B25/45 Z; H01M4/36 C

According to International Patent Classification (IPC) or to both national classification and IPC

**B. FIELDS SEARCHED**

Minimum documentation searched (classification system followed by classification symbols)
H01M4/58; C01B25/45; H01M4/36

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-216473 A (MITSUI SHIPBUILDING & ENGINEERING CO., LTD.) 08 November 2012 (2012-11-08) | 1-8 |
| A | WO 2016/158566 A1 (TORAY INDUSTRIES, INC.) 06 October 2016 (2016-10-06) | 1-8 |
| A | JP 2011-76820 A (HITACHI VEHICLE ENERGY, LTD.) 14 April 2011 (2011-04-14) | 1-8 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 February 2021 (12.02.2021) | 22 February 2021 (22.02.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/045410

| Patent Documents referred in the Report | Publication Date | Patent Family | Publication Date |
|---|---|---|---|
| JP 2012-216473 A | 08 Nov. 2012 | US 2014/0212756 A1<br>WO 2012/137572 A1<br>EP 2696411 A1<br>CN 103733395 A<br>KR 10-2014-0063515 A | |
| WO 2016/158566 A1 | 06 Oct. 2016 | US 2017/0352879 A1<br>EP 3279137 A1<br>CN 107428535 A<br>KR 10-2017-0133387 A | |
| JP 2011-76820 A | 14 Apr. 2011 | US 2012/0183839 A1<br>WO 2011/039921 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010040357 A
- JP 2012216473 A
- JP 2014146513 A

**Non-patent literature cited in the description**

- **GARDINER, G. R. ; ISLAM, M. S.** Anti-Site Defects and Ion Migration in the LiFe0.5Mn0.5PO4 Mixed-Metal Cathode Material. *Chem. Mater.,* 2010, vol. 22 (3), 1242-1248